# EUROPEAN PATENT APPLICATION

(11) **EP 1 671 553 A1**
(43) Date of publication of application: **21.06.2006**
(21) Application number: 05077889.3
(22) Date of filing: 15.12.2005
(51) Int. Cl.: A23N 15/00, A23N 15/04

(54) **Apparatus for processing sprouts**

(30) Priority: 16.12.2004 NL 1027793
(71) Applicant: GEGE Machinebouw B.V., 5464 RA Uden (NL)
(72) Inventor: van Asseldonk, Johannes Maria, 5464 RA Mariaheide (NL)
(74) Representative: Dorna, Peter

(57) **Abstract**

The invention provides an apparatus for processing sprouts, comprising separating means for separating butts from sprouts as well as conveying means for conveying sprouts in a direction of transport to the separating means, said conveying means comprising roller means provided with two opposed, spaced-apart guide surfaces, which together form a roller chute of at least substantially blunted V-shape, and with a compression element that moves along in the direction of transport so as to cause the sprouts to be processed to roll in the roller chute, in such a manner that the butts of the sprouts to be processed extend below the roller chute with a certain regularity while rolling, said separating means being arranged for separating the butts from the sprouts at a moment when the butts extend below the roller chute, wherein control means and detection means are provided, which detection means are arranged for detecting at what moment the butt of a sprout to be processed extends below the roller chute, and which control means are arranged for driving the separating means in such a manner that the separating means are temporarily operative at that moment for separating the butt from the sprout in question.

## Description

The present invention relates to an apparatus for processing sprouts, comprising separating means for separating butts from sprouts as well as conveying means for conveying sprouts in a direction of transport to the separating means, said conveying means comprising roller means provided with two opposed, spaced-apart guide surfaces, which together form a roller chute of at least substantially blunted V-shape, and with a compression element that moves along in the direction of transport so as to cause the sprouts to be processed to roll in the roller chute, in such a manner that the butts of the sprouts to be processed extend below the roller chute with a certain regularity while rolling, said separating means being arranged for separating the butts from the sprouts at a moment when the butts extend below the roller chute.

To prepare sprouts for consumption, it is generally desirable to remove the so-called butts, which have a bitter taste, from the sprouts. While this used to be done by the consumers themselves, at present consumers increasingly like to buy sprouts from which the butts have already been removed.

International patent application WO 2004/030475 A2 discloses an apparatus by means of which sprouts can be mechanically de-butted. The apparatus comprises four endless belts having a thickness practically equal to the diameter of de-butted sprouts, which belts are provided with spaced-apart, tapered holes therethrough. Sprouts are manually placed into said holes with their butts facing downwards, with the tapered holes being so dimensioned that the butts of the sprouts extend just below the conveyor belts, whilst the upper sides of the sprouts extend just above the conveyor belt. The main part of each sprout extends within the thickness of the conveyor belt. The sprouts are supported on the inclined circular side face of the associated tapered hole. Parallel supporting belts that support the butts of the sprouts run a limited distance beneath the conveyor belts, running at the same linear speed as said conveyor belts. Disposed between the supporting belts and the conveyor belts are a number of cutting discs, which rotate about axes of rotation that extend perpendicularly to the conveyor belts and the supporting belts for severing the butts from the sprouts. Disposed above the conveyor belts is a beltlike pressure roller which is filled with a fluid and which gently presses the sprouts down in the holes of the conveyor belts. The sprout is thus clamped between the associated supporting belt and the compression roller.

An important drawback of the prior art apparatus as briefly described above is the fact that human action is required for placing the sprouts in the correct orientation, i.e. with the butts facing downwards, into the holes of the four endless conveyor belts. This limits the sprout-processing capacity of the apparatus. A solution to this problem is presented by the apparatus that is disclosed in German patent application DE-A1-2042917. Said apparatus is considered to be the nearest prior art to the present invention. The apparatus in question uses a funnel, from where a vertical conveyor supplies sprouts to a number of parallel pairs of conveyor belts defining a gap between them. The conveyor belts in turn transfer the sprouts to pairs of triangular, seen in cross-sectional view, guides that jointly form a roller chute of blunted V-shape. A compression belt of a foam material extends above the guides, which belt causes the sprouts to roll through the parallel roller chutes. Disposed underneath the roller chutes are a number of knives, which rotate continuously in groups of four about vertical axes of rotation so as to sever the butts from the sprouts insofar as said butts extend below the roller chutes.

Although the sprout cutting machine as disclosed in DE-A1-2042917 provides an advantage as regards reducing the extent to which human action is required, said apparatus has this major drawback that the de-butting of the sprouts takes place in an imprecise manner, as a consequence of which the resulting sprouts are not suitable for being packaged and sold as ready-to-cook sprouts in transparent or non-transparent packaging bags. It should be realised in this connection that a sprout that has been properly cut generally has the shape of a sphere, a segment of which has been severed from the sprout at the location of the original butt. Because of the continuous nature of the cutting operations with the cutting apparatus according to DE-A1-2042917, in which the sprout passes a knife a number of times while being conveyed from the beginning of the roller chute to the end thereof, which knife severs a part of the sprout that extends below the roller chute at that moment, it is impossible to prevent parts of the sprout being cut loose not only at the side of the butt but also at other positions of the sprout, thus damaging the sprout. The object of the present invention is to provide an apparatus as referred to in the introduction, by means of which sprouts can be processed in a fully automated manner, such that the resulting sprouts are suitable for being packaged and sold as ready-to-cook sprouts, because the sprouts have been correctly de-butted and are further undamaged. In order to accomplish that object, the apparatus according to the present invention is characterized in that control means and detection means are provided, which detection means are arranged for detecting at what moment the butt of a sprout to be processed extends below the roller chute, and which control means are arranged for driving the separating means in such a manner that the separating means are temporarily operative at that moment for separating the butt from the sprout in question. In this way it is possible to separate parts from the sprouts in a very precise manner, with a minimal risk of other parts being separated from the sprouts. In particular, it is possible to achieve that if the sprout has unround parts not only at the location of the butt but also at other locations, said other parts will not be separated from the sprout as well, assuming that the butt forms the largest unround part of the sprout. Furthermore, it is prevented in this manner that parts of the sprout having the shape of a segment of a sphere are severed from the sprout at positions where this is not desirable in spite of the fact a sprout does not have any unround parts besides the butt.

Preferably, the detection means are arranged for first detecting for each sprout to be processed the maximum extent to which the sprout in question extends below the roller chute while rolling thereon and for delivering a control signal to the control means for activating and subsequently deactivating the separating means with a certain delay the next time the detection means determine that the sprout in question extends maximally below the roller chute. At some point during a full revolution of the sprout, the butt will be positioned at the bottom side and thus form the lowermost point that can be taken up by the sprout. The detection means are capable of recognising this point, and when the sprout in question reaches this lowermost point a next time, with the butt positioned at the bottom side of the sprout below the roller chute again, the butt can be separated from the sprout by the separating means, with the separating means only being activated temporarily, viz. only when the butt is positioned at the bottom side of the sprout. The moment the sprout extends maximally below the roller chute a next time may be detected by detection means, but on the other hand this moment may also be derived from at least one previous detection, at which point in time the sprout was present at an upstream location with the butt positioned at the bottom side thereof.

In particular if the rate at which the sprouts are processed with the apparatus according to the invention is relatively high, there is a risk that the sprout will already have rolled slightly further onwards the next time the sprout in question is detected to extend maximally below the roller chute. In order to be able to optimally process these sprouts all the same, it is advantageous if the control means are arranged for activating the conveying means upon determination by the detection means that the sprout in question has rolled further onwards after having extended maximally below the roller chute a next time, in such a manner that the compression element moves back, thus rolling the sprout in question back in the roller chute until the sprout in question extends maximally below the roller chute again, before activating the separating means and subsequently deactivating said means again with a certain delay.

In order to carry out the de-butting of the sprouts with maximum precision, in spite of a high processing rate, the control means are preferably arranged for deactivating the conveying means temporarily so as to stop the compression element temporarily while the separating means are operative.

A highly precise detection by the detection means can be achieved if the detection means comprise a laser sensor and a laser source for emitting a laser beam in the direction of transport under the roller chute. Since the laser beam is limited in the direction of transport, the detection takes place independently of the longitudinal position of the sprout in the roller chute.

Quite preferably, the compression element is made up of a compression belt that is passed over two rotatable pulleys. Such an embodiment makes it possible in a simple manner for the compression element to move along in the direction of transport of the sprouts.

The compression belt is preferably a sponge-like belt, so that an adequate engagement of the sprouts by the compression belt can be achieved.

Generally, leaves come loose from the sprouts as well when the butts are being separated from the sprouts by separating means. The discharge of said loose leaves can be realised in an effective manner if suction means are disposed upstream of the separating means, within the length of the roller chute yet, for sucking out leaves that have come loose from the sprouts upon separation of the butts from the sprouts.

The separating means preferably comprise at least one knife, more preferably a rotary knife.

It may be even more advantageous if said at least one knife is capable of reciprocating translating movement in a direction perpendicular to the longitudinal direction of the roller chute. On the one hand, a knife that is configured in this way can be of simple and thus inexpensive construction. On the other hand, such a knife has this advantage that the sprout is pressed against a flank of the roller chute upon being cut and consequently will not tend to move in the longitudinal direction of the roller chute under the influence of the operation of the knife during cutting, which further enhances the precision with which the cutting process is carried out.

To enable a metered supply of sprouts to the roller chute, the conveying means preferably comprise a vibrating trough for supplying sprouts to be processed to the roller chute and/or for discharging processed sprouts from the roller chute.

In case leaves come loose from the sprouts also at locations some distance downstream of the separating means after the sprouts have been de-butted, for example as a result of the rolling motion of the sprouts, it will be advantageous if further suction means are provided along the length of a vibrating trough used for discharging processed sprouts for sucking out leaves that have come loose from the sprouts.

It is furthermore preferable in that connection if an opening is present in the vibrating trough at the location of said further suction means for sucking out the leaves via said opening, so that it is possible to dispose the suction means at the bottom side of the vibrating trough.

To prevent the sprouts being stuck in the vibrating trough used for discharging processed sprouts under the influence of the operation of said further suction means, the conveying means are provided with pushing means at the location of said further suction means for pushing the sprouts ahead in the vibrating trough.

According to a special embodiment of the present invention, in particular in order to prevent loosely connected leaves from interfering with a correct detection by the detection means, supporting means comprising at least one supporting element for resiliently supporting the bottom side of a sprout rolling through the roller chute are provided underneath the roller chute. Any loose leaves are thus pressed against the sprout to be processed, so that they cannot cause an incorrect detection.

The resilient support of a sprout by the supporting element is obtained in a simple manner if said at least one supporting element is aligned with a resilient material, such as a sponge-like material. The resilient characteristics of this material must be such that abutment of the sprouts against the flanks of the roller chute is guaranteed in spite of the support by said at least one supporting element.

In order to create space for the removal of loose leaves, the supporting means preferably comprise moving means for moving said at least one supporting element between a supporting position and a non-supporting position. The removal of the leaves can take place with the supporting elements in the non-supporting position.

To remove leaves in this manner, blowing means are preferably provided for blowing away leaves that have come off.

As regards the supply of sprouts to be processed, it is furthermore emphasised that a special preferred embodiment of an apparatus according to the invention is characterized in that supply means are provided for supplying sprouts to be processed to the roller chute, with the supply means receiving a control signal from the control means for every sprout. In this way it is possible to prevent the detection of a particular sprout by the detection means being interfered with by an upstream sprout.

To the same advantage it is preferable if the roller chute is at least substantially concave, so that upstream sprouts, inspired of the fact that they may already be present in the roller chute, are not within sight of the detection means yet, not even if the detection means make use of beams that extend in the direction of transport underneath roller chute.

According to another aspect of the present invention, the invention further relates to a method for processing sprouts, comprising the steps of causing sprouts to roll through a roller chute of at least substantially blunted V-shape and separating a butt from a sprout at a moment when said butt extends below the roller chute. Such a method is known from the aforementioned patent publication DE-A1-2042917.

The method according to the invention is characterized by detecting the moment when the butt of a sprout to be processed extends below the roller chute, and activating the separating means temporarily at that moment for separating the butt from the sprout in question. Furthermore preferably, the rolling motion of the sprout in question in the roller chute is stopped temporarily during the time the separating means are temporarily activated.

The invention will now be explained in more detail by means of a description of two preferred embodiments thereof, in which reference is made to the following figures:
Figures 1 and 2 schematically show in top plan view and in side elevation a first preferred embodiment of a sprout cutting machine according to the present invention;
Figures 3 and 4 show the regions III, IV in figures 1 and 2 in more detail;
Figures 5-9 are cross-sectional views at the locations indicated V-IX in figure 4;
Figures 10, 11 and 12 are a top plan view, a side view and a rear view, respectively, of a (part of a) second preferred embodiment of a sprout cutting machine according to the present invention;
Figure 13 shows the detail XIII of figure 11;
Figures 14a and 14b are cross-sectional views of the roller chute of the sprout cutting machine according to the second preferred embodiment during two successive stages; and
Figure 15 schematically shows the operation of the detection means as used with the sprout cutting machine according to the second preferred embodiment.

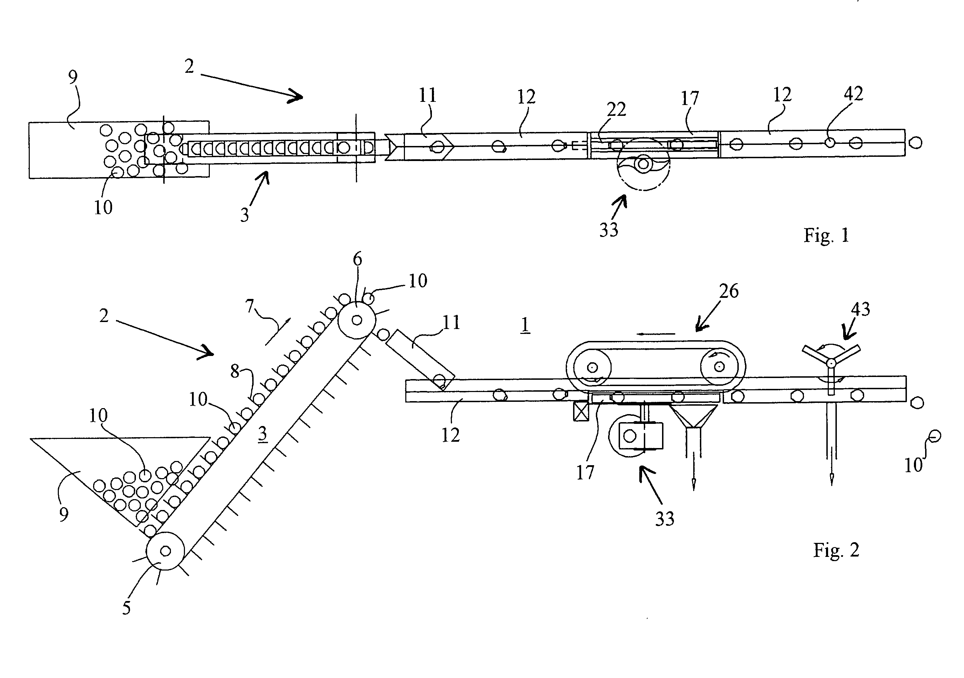

The sprout cutting machine 1 as shown in figures 1-4 is suitable for the fully automated de-butting of sprouts. To that end the sprout cutting machine 1 comprises a conveying system 2 with a bunker belt conveyor 3 comprising an endless bunker belt 4 that is passed over pulleys 5, 6, one of which is driven by driving means (not shown), so that the upper part of the bunker belt 4 moves in the direction indicated by the arrow 7. The bunker belt 4 is provided with regularly spaced-apart carrying strips 8 on the outer side thereof, which strips extend perpendicularly to the plane of drawing of figure 2. The carrying strips 8 scoop sprouts 10 one by one from the hopper 9. The dimension of the carrying strips 8 and the spacing therebetween have been selected such that only one sprout 10 will be present between two successive carrying strips 8. The pulley 6 is disposed obliquely above the pulley 5, so that sprouts 10 are transported upwards at an angle by the bunker belt conveyor 3 without there being a risk of sprouts 10 falling out of the V-shaped compartments formed by the carrying strips 8 and the bunker belt 4 during said transport.

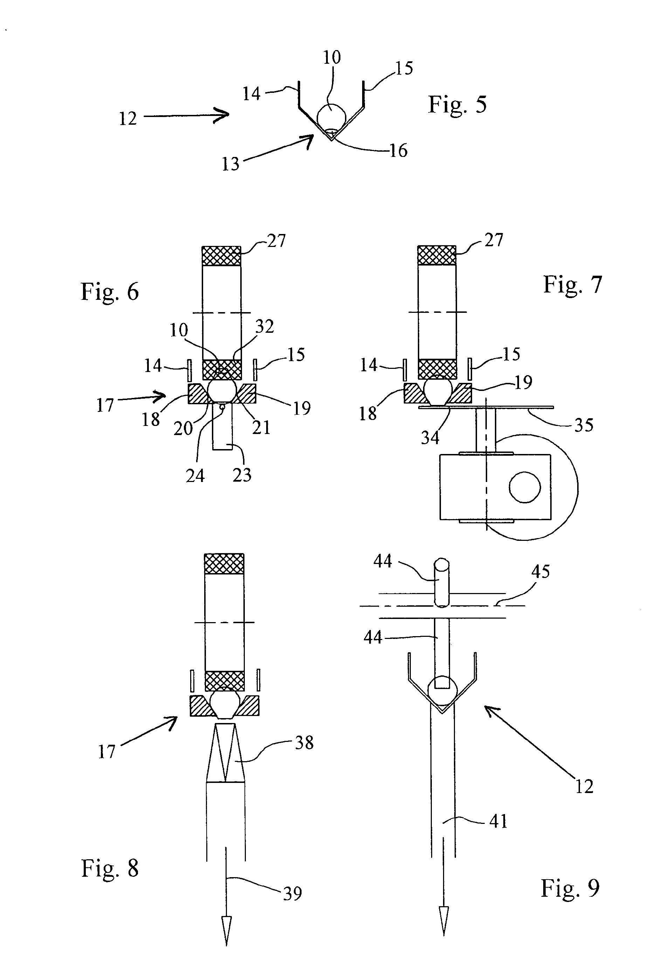

At the top of the bunker belt conveyor 3, at the pulley 6, the sprouts 10 are unloaded and slide into the vibrating trough 12 via the chute 11. Figure 5 is a cross-sectional view of the vibrating trough 12, which is V-shaped at the bottom side 13, having a vertically upright walls 14, 15 that join the upper ends of the legs of the V-shape of the bottom side 13. The V-shaped bottom side 13 of the vibrating trough 12 causes sprouts 10, which will fall into the vibrating trough 12 in a random orientation, to assume an orientation such that the unroundness of the sprouts 10, viz. the butt 16 thereof, will be centrally positioned at the bottom of the point of the V-shaped bottom side 13 as a result of the action of the vibrating trough. Halfway the length of the vibrating trough 12, the V-shaped bottom side 13 is missing along part of the length of the vibrating trough 12. A roller chute 17 takes the place of the bottom side 13 at that location. The walls 14, 15 continue at the location of the roller chute 17. The cross-section of the roller chute 17 is clearly shown in figures 6-8. The roller chute is in fact only made up of two mirror-symmetrical, slightly spaced-apart guide segments 18, 19, which are of square cross-section, with two right angles and two non-right angles, so that two guide surfaces 20, 21 are formed, which jointly define a blunted V-shape, in the sense that the point of the V-shape is missing, as a result of which a gap 22 is present between the bottom sides of the guide elements 18, 19.

Directly upstream of the roller chute 17, a detection element 23 is provided directly below the point of the V-shaped bottom side 13 of the vibrating trough 12, which detection element emits laser beams from a laser source 24 in the direction of transport 25. The height of the laser source 24 is adjustable.

Disposed above the roller chute 17 is a compression conveyor 26 comprising a compression belt 27 of a sponge-like type, i.e. having a relatively soft outer side, and two pulleys 28, 29, about which the endless compression belt 27 is passed and whose horizontal axes of rotation are located above the ends of the vibrating trough 17. One of the two pulleys 28, 29 is driven in the direction indicated by the arrows 30, 31, so that the lower part 32 of the compression belt 27 is moved in the direction of transport 25. The compression belt 32 is positioned centrally above the roller chute 17, spaced therefrom by such a distance that the soft outer side of the compression belt 27 engages sprouts 10 and causes them to roll in the roller chute, which, because of the presence of the gap 22, will inevitably lead to the butts 16 of the sprouts projecting below the roller chute 17 at some point during said rolling. This moment is detected by means of the laser beam from the detection element 23, which subsequently activates cutting means 33 for a brief period of time.

The cutting means 33 comprise two sickle-shaped knives 34, 35 having substantially radially oriented cutting edges 51, 52, which are arranged in rotation symmetry around the vertical axis of rotation 36 about which the knives 34, 35 rotate in the direction indicated by the arrow 53 when the driving motor 37 is energized. The knives 34, 35 extend directly below the level of the roller chute 17, in such a manner that if parts of the sprout 10, such as in particular the butts 16 thereof in the present example, extend below the roller chute 17 via the gap 22, the projecting part of the sprout 10, or the butt 16, is severed from the remaining part of the sprout 10 upon rotation of the knives 34, 35 about the axis of rotation 36.

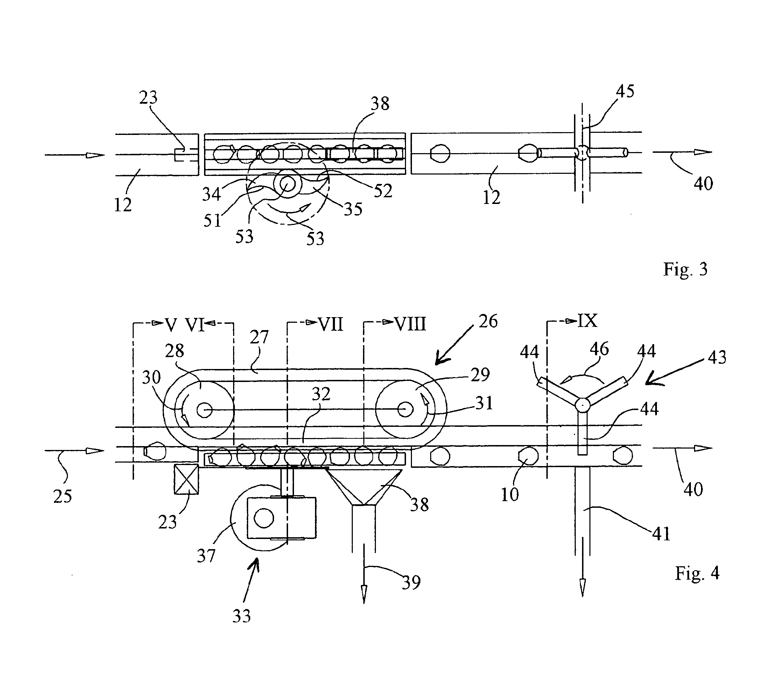

The driving motor 37 is temporarily activated once it has been determined by means of the detection element 23 that a butt 16 extends below the roller chute 17. Said activation is temporary, in the sense that the knives 34, 35 only turn through half a revolution about the axis of rotation 36, during which half revolution one of the two knives 34, 35 is operative for cutting through a sprout 10. In the non-activated condition, the knives 34, 35 take up the position that is shown in figure 3, i.e. outside the path of the sprouts 10 in the roller chute 17. The height of the knives 34, 35 can be adjusted by adjusting means (not shown), so that the depth of said cutting can be geared to the variety of the sprouts being processed. With the same view in mind, the spacing between the guide elements 18, 19 may also be configured to be adjustable or exchangeable, for example for guide elements having differently oriented guide surfaces 20, 21.

Disposed underneath a roller chute 17, directly beyond the cutting means 33, a funnel-shaped suction nozzle 38 is connected to suction means (not shown) for sucking out leaves that have come loose from the sprouts 10 as a result of the de-butting of the sprouts 10 in the direction indicated by the arrow 39.

At the end of the roller chute 17, the de-butted sprouts 10 are taken over again by the rear part of the vibrating trough 12, in which the sprouts are transported further in the direction indicated by the arrow 40. During this latter part of the conveying path, a few leaves that were already loosely attached to the sprouts 10 will come off the remaining part of the sprouts then. A suction tube 41 is provided for discharging said leaves, which suction tube connects to the bottom side of the vibrating chute 12, at which location the vibrating trough 12 has an opening 42 through which the loose leaves can pass. To prevent sprouts 10 getting stuck in the vibrating trough 12 at the opening 42, a mill 43 comprising three arms 44, which can rotate in the direction indicated by the arrow 46 about a horizontal axis of rotation 45, is provided above the opening 42. Since the arms 44 strike against the sprouts 10 upon rotation of the mill 43, said sprouts 10 are forced past the opening 42, whereupon they can be collected for packaging and consumption.

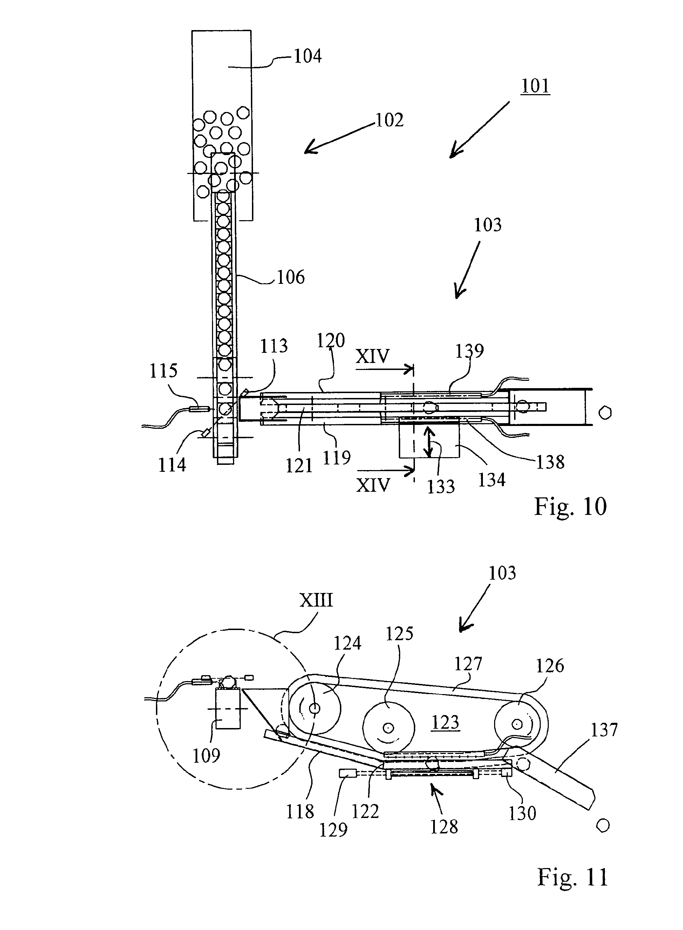

Figures 10-15 relate to a second preferred embodiment of a sprout cutting machine 101 according to the invention. The sprout cutting machine 101 essentially comprises the supply unit 102 and a cutting unit 103, which are oriented at right angles relative to each other.

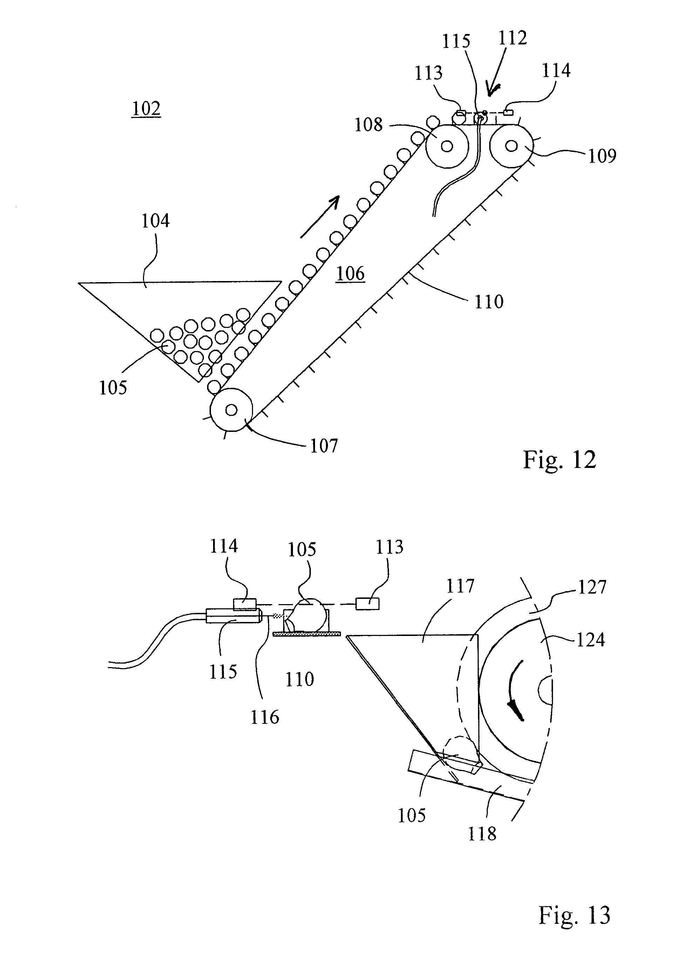

The supply unit 102 (figure 12) comprises a container 104 from which sprouts 105 to be processed can be transported upwards one by one by means of the bunker belt conveyor 106. The bunker belt conveyor 106 comprises three pulleys 107, 108, 109, one of which is driven by driving means (not shown) in such a manner that the bunker belt 110 that is passed over the pulleys 107, 108, 109 moves in the direction indicated at 111. The bunker belt 110 extends horizontally between the pulleys 108 and 109. A light sensor (also refer to figure 10) comprising a transmitter 113 and a receiver 114 is disposed diagonally above said part of the bunker belt 110. As soon as the light sensor 112 detects the arrival of a sprout 105 at that location, the drive of the bunker belt 110 is stopped temporarily by control means (not shown), in such a manner that the sprout 105 in question will be positioned directly in front of a blowing nozzle 115.

As soon as control means of the cutting unit 103 deliver a signal that the cutting unit 103 is ready to receive a next sprout, said control means will deliver an activation signal, so that an air jet from the blowing nozzle 115 blows the sprout 105 into the funnel 117. It is noted in this connection that the speed of the bunker belt 110 must be such that a next sprout will at all times be ready the moment the control system of the cutting unit 103 requests this.

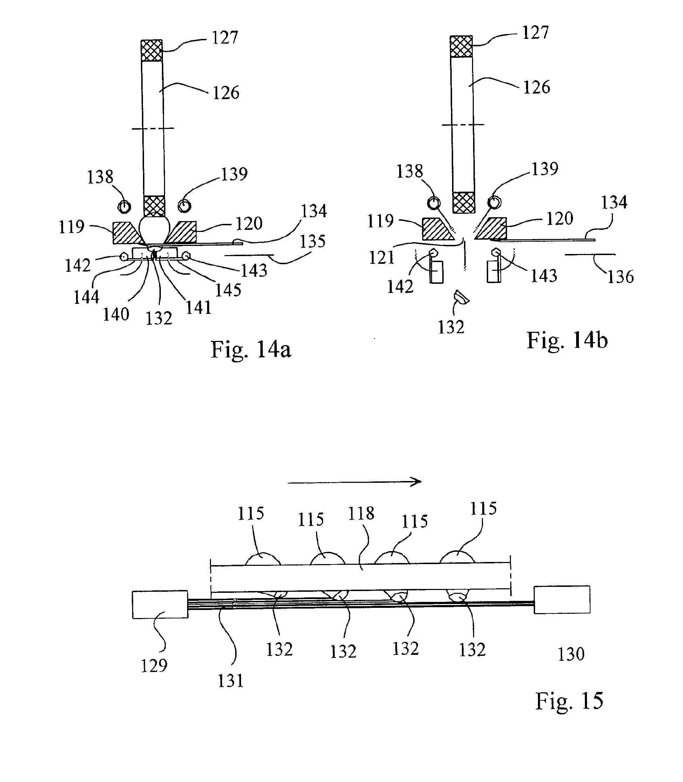

A roller chute 118 connects to the bottom side of the funnel 117. The roller chute 118 has a cross-section that is exactly identical to that of the roller chute 17, for example as shown in figures 6-8. The roller chute 118 comprises two slightly spaced-apart guide elements 119, 120 arranged in mirror-symmetrical relationship, between which a gap 121 is present (also referred to figure 14b). The roller chute 118 has a bend 122 approximately halfway its length, as a result of which the roller chute 118 as a whole has a concave shape, with the first part exhibiting a downward slope and the second part extending horizontally.

Disposed above the roller chute 118 is a compression conveyor 123 provided with three pulleys 124, 125, 126, one of which is driven by driving means (not shown), over which a sponge-type endless compression belt 127 is passed. The lower part of the compression belt 127 extends parallel to the roller chute 118 and ensures that every sprout 105 is pressed down on the roller chute 118 and rolls therein in such a manner that, especially after a number of revolutions, the butt of the sprout is positioned in the centre of the roller chute and, because of the presence of the gap 121, extends below the guide elements 119, 120 with a certain regularity before the sprout in question has reached the bend 122.

It is noted in this connection that it is possible to adjust the spacing between the guide elements 119, 120, using adjusting means (not shown), so as to be able to process different varieties of sprouts and sprouts having different diameters, and to adjust the degree to which sprouts extend below the guide segments 119, 120.

Disposed underneath the horizontal part of the roller chute 118 is a laser sensor 128 provided with a laser source 129 and a laser beam receiver 130. The laser source 129 emits a laser beam 131 centrally underneath the roller chute 118. Figure 15 shows how an increasingly smaller height of said laser beam 131 finally reaches the laser beam receiver 130 as the sprout 115, which is shown in four successive rolling positions in figure 15, extends further below the roller chute 118. Figure 15 shows how the butt 132 of the last sprout 115 extends maximally below the roller chute 118. Continued rolling of the sprout 115 results in a larger part of the laser beam 131 from the laser source 129 reaching the laser beam receiver 130 again. In this way it is possible to determine the moment when the butt 132 of the sprout 115 extends maximally below the roller chute 118.

During a next revolution of the roller chute 118, this information is used for stopping the rolling motion of the sprout 115 temporarily, which is done by stopping the drive of the compression belt 127 temporarily. If it is determined by means of the laser sensor 128 that, for whatever reason, the sprout 115 has continued to roll slightly too far, as a result of which the butt 132 points slightly rearwards, it is even possible within the framework of the present invention to drive the compression belt 127 in the opposite direction, causing the sprout 115 to roll back until the butt 132 extends vertically downwards and the butt 132 of the sprout 115 extends maximally below the roller chute 118.

The moment the sprout 115 is temporarily stationary in the roller showed 118, the control means (not shown) steer the knife 132, which is capable of reciprocating movement in the directions indicated by the double arrow 133, in the direction of the sprout 115 as indicated by the arrow 135 (figure 14a), as a result of which the butt 132 is separated from the remaining part of the sprout 115. The knife 134 moves just below the bottom sides of the guide elements 119, 120 during said movement. If desired, the width of the gap between the knife 134 on the one hand and the guide elements 119, 120 on the other hand can be increased by adjusting means (not shown). After the knife 134 has cut through the sprout 115, the knife 134 is retracted in the direction indicated by the arrow 136 (figure 14b). Then the compression belt 127 is driven again, whereupon the sprout 115, without its butt 132, is rolled further and is taken over by the downwardly extending discharge chute 137, through which the sprouts roll downwards under the influence of the force of gravity, eventually landing in a crate or on a discharge conveyor.

Blow tubes 138, 133 are provided above the guide elements 119, 120 from the beginning of the horizontal part of the roller chute 118, along a substantial part of the length thereof, which blow tubes are each provided with blow holes directed along the sloping flanks of the guide elements 119, 120. Two supporting strips 140, 141, which are pivotable about respective pivot axes 142, 143, are provided underneath the guide elements 119, 120 along approximately the same length as the blow tubes, which supporting strips are lined with a sponge material 144, 145 at their upper sides. The supporting strips 140, 141 are pivotable between a supporting position as shown in figure 14a and a non-supporting position as shown in figure 14b. The supporting strips only take up the non-supporting position that is shown in figure 14b directly after the knife 134 has been retracted again and air jets are blown into the roller chute 118 by means of the blow tubes 138, 139 so as to blow any leaves that remain behind and/or the separated but 132 away between the vertically pivoted supporting strips 144, 145. The supporting strips 140, 141 are in the supporting position that is shown in figure 14a both during the (larger part of the) rolling motion of the sprouts 115 and the cutting of the sprouts 115, which achieves that any loosely connected leaves are pressed against the sprout 115, so that said loosely connected leaves will not interfere with the detection by the laser sensor 128.

It will be apparent to those skilled in the art that the sprout cutting machines 1 and 101 as described above make it possible to separate the butts from the sprouts in a fully automated manner without any, or at least significantly less, human interference than is the case with sprout cutting machines according to the prior art, with the separation of the butts taking place in a very accurate manner, using a high processing rate. Numerous variants of the invention are conceivable to those skilled in the art. A possible variant of the sprout cutting machine 1 is, for example, an embodiment in which an alternative detection element is used for the detection element 23, which element is capable of forming an exact profile as regards the degree to which a sprout 10 extends below the roller chute 17 while rolling in the roller chute 17, so that the position of the butt 16 can be exactly determined and the cutting means 33 are activated, for example, the next time the butt 16 is positioned directly below the sprout 10.

## Claims

1. Apparatus for processing sprouts, comprising separating means for separating butts from sprouts as well as conveying means for conveying sprouts in a direction of transport to the separating means, said conveying means comprising roller means provided with two opposed, spaced-apart guide surfaces, which together form a roller chute of at least substantially blunted V-shape, and with a compression element that moves along in the direction of transport so as to cause the sprouts to be processed to roll in the roller chute, in such a manner that the butts of the sprouts to be processed extend below the roller chute with a certain regularity while rolling, said separating means being arranged for separating the butts from the sprouts at a moment when the butts extend below the roller chute, **characterized in that** control means and detection means are provided, which detection means are arranged for detecting at what moment the butt of a sprout to be processed extends below the roller chute, and which control means are arranged for driving the separating means in such a manner that the separating means are temporarily operative at that moment for separating the butt from the sprout in question.

2. Apparatus according to claim 1, **characterized in that** the detection means are arranged for first detecting for each sprout to be processed the maximum extent to which the sprout in question extends below the roller chute while rolling thereon and for delivering a control signal to the control means for activating and subsequently deactivating the separating means with a certain delay the next time the detection means determine that the sprout in question extends maximally below the roller chute.

3. Apparatus according to claim 1 or 2, **characterized in that** the control means are arranged for activating the conveying means upon determination by the detection means that the sprout in question has rolled further onwards after having extended maximally below the roller chute a next time, in such a manner that the compression element moves back, thus rolling the sprout in question back in the roller chute until the sprout in question extends maximally below the roller chute again, before activating the separating means and subsequently deactivating said means again with a certain delay.

4. Apparatus according to claim 1, 2 or 3, **characterized in that** the control means are arranged for deactivating the conveying means temporarily so as to stop the compression element temporarily while the separating means are operative.

5. Apparatus according to any one of the preceding claims, **characterized in that** the detection means comprise a laser sensor and a laser source for emitting a laser beam in the direction of transport under the roller chute.

6. Apparatus according to any one of the preceding claims, **characterized in that** the compression element is made up of a compression belt that is passed over two rotatable pulleys.

7. Apparatus according to claim 6, **characterized in that** said compression belt is a sponge-type belt.

8. Apparatus according to any one of the preceding claims, **characterized in that** suction means are disposed upstream of the separating means, within the length of the roller chute yet, for sucking out leaves that have come loose from the sprouts upon separation of the butts from the sprouts.

9. Apparatus according to any one of the preceding claims, **characterized in that** said separating means comprise at least one knife.

10. Apparatus according to claim 9, **characterized in that** said at least one knife is capable of reciprocating translating movement in a direction perpendicular to the longitudinal direction of the roller chute.

11. Apparatus according to any one of the preceding claims, **characterized in that** the conveying means comprise a vibrating trough for supplying sprouts to be processed to the roller chute and/or for discharging processed sprouts from the roller chute.

12. Apparatus according to claim 11, **characterized in that** further suction means are provided along the length of a vibrating trough used for discharging processed sprouts for sucking out leaves that have come loose from the sprouts.

13. Apparatus according to claim 12, **characterized in that** an opening is present in the vibrating trough at the location of said further suction means for sucking out the leaves via said opening.

14. Apparatus according to claim 12 or 13, **characterized in that** the conveying means are provided with pushing means at the location of said further suction means for pushing the sprouts ahead in the vibrating trough.

15. Apparatus according to any one of the preceding claims,
**characterized in that** supporting means comprising at least one supporting element for resiliently supporting the bottom side of a sprout rolling through the roller chute are provided underneath the roller chute.

16. Apparatus according to claim 15, **characterized in that** said at least one supporting element is aligned with a resilient material.

17. Apparatus according to claim 15 or 16, **characterized in that** the supporting means comprise moving means for moving said at least one supporting element between a supporting position and a non-supporting position.

18. Apparatus according to any one of the preceding claims, **characterized in that** blowing means are provided for blowing away leaves that have come off.

19. Apparatus according to any one of the preceding claims, **characterized in that** supply means are provided for supplying sprouts to be processed to the roller chute, with the supply means receiving a control signal from the control means for every sprout.

20. Apparatus according to any one of the preceding claims, **characterized in that** the roller chute is at least substantially concave.

21. A method for processing sprouts, comprising the steps of
- causing sprouts to roll through a roller chute of at least substantially blunted V-shape, and
- separating a butt from a sprout at a moment when said butt extends below the roller chute,
**characterized by**
- detecting the moment when the butt of a sprout to be processed extends below the roller chute, and
- activating the separating means temporarily at that moment for separating the butt from the sprout in question.

22. A method according to claim 21, **characterized by** the step of stopping the rolling motion of the sprout in question in the roller chute temporarily during the time the separating means are temporarily activated.
